# EUROPEAN PATENT SPECIFICATION

(11) **EP 2 790 033 B1**
(45) Date of publication and mention of the grant of the patent: **06.01.2016**
(21) Application number: 12856558.7
(22) Date of filing: 26.10.2012
(51) Int. Cl.: G01S 7/481, G01C 3/06, G01S 17/36, G01S 17/42, G01S 7/497

(54) **DISTANCE MEASUREMENT METHOD AND DEVICE, AND SHAPE MEASUREMENT DEVICE IN WHICH DISTANCE MEASUREMENT DEVICE IS INSTALLED**
ABSTANDSMESSVERFAHREN UND VORRICHTUNG, SOWIE FORMVERMESSUNGSVORRICHTUNG MIT INSTALLIERTER ABSTANDSMESSUNGSVORRICHTUNG
PROCÉDÉ ET DISPOSITIF DE MESURE DE DISTANCE, ET DISPOSITIF DE MESURE DE FORME DANS LEQUEL UN DISPOSITIF DE MESURE DE DISTANCE EST INSTALLÉ

(30) Priority: 05.12.2011 JP 2011265387
(43) Date of publication of application: 15.10.2014
(73) Proprietor: Hitachi, Ltd., Tokyo 100-8280 (JP)
(72) Inventor: KASAI, Hiroaki, Tokyo 100-8280 (JP); HARIYAMA, Tatsuo, Tokyo 100-8280 (JP); WATANABE, Masahiro, Tokyo 100-8280 (JP); YOSHIMURA, Kazushi, Tokyo 100-8280 (JP)
(74) Representative: Moore, Graeme Patrick
(86) International application number: PCT/JP2012/077672
(87) International publication number: WO 2013/084616

(56) References cited:
- JP-A- H1 090 591
- JP-A- H09 243 747
- JP-A- S60 138 484
- JP-A- S61 145 476
- JP-A- 2000 147 122
- JP-A- 2004 069 611
- JP-A- 2010 014 549
- JP-A- 2010 256 205
- JP-A- 2010 537 183

## Description

### TECHNICAL FIELD

The present invention relates to a distance measuring method and a distance measuring device for measuring, for example, shapes of middle and large size products (a turbine, a railway vehicle, an escalator, a compressor, an automobile, an airplane, and the like) with high precision, and a shape measuring device in which the distance measuring device is installed.

### BACKGROUND ART

Quality of products during machining and assembly in manufacturing is secured, and additionally, three-dimensional shape measurement of a worked part and a product shape is required for reduction of hours of work.

Patent Literature 1 relates to a distance measuring device through a phase difference in which an optical frequency comb is used. The optical frequency comb means a pulse light source in which longitudinal modes are placed at even intervals on an optical frequency axis, and a phase difference between respective modes is constant. When the optical frequency comb is detected by using a detector, a beat signal between the modes is detected by photoelectric conversion through a sensor. In the beat signals detected at this time, a number of frequency components corresponding to an integral multiple of a repetition frequency of a laser are comb-like generated. While a beat frequency for use in a distance measurement is selected and changed by an electric filter, range-finding (distance measurement) is performed from a phase difference between beat signals of a reference beam which is not irradiated on an object and a return beam of a beam which is irradiated on the object. While a measurement range is widened by using several types of frequencies, range-finding is performed with high precision.

Further, Patent Literature 2 relates to a distance measuring device that adds an intensity modulation to a continuous beam by a modulation optical modulator, irradiates the continuous beam on the object, and demodulates the reflected beam by a demodulation optical modulator for detection.

JP 9-243747 describes a range-finding device for simplifying and miniaturizing a focusing mechanism.

### CITATION LIST

### PATENT LITERATURE

Patent Literature 1: Japanese Patent No. 4617434
Patent Literature 2: Japanese Patent No. 3089376

### SUMMARY OF INVENTION

### TECHNICAL PROBLEM

In the distance measuring device of Patent Literature 1, for performing range-finding with precision of several tens of µm in a phase measurement precision of about 2π/100, a frequency of about several tens of GHz needs to be treated. Since a light-receiving diameter of a light receiver capable of detecting a frequency of several tens of GHz is as small as about several tens of µm, except a case where an object has a mirror plane or the like and a return beam having preferable directivity is obtained, a focus position must be changed in accordance with a distance up to the object, a beam must be effectively focused on the light receiver, and a sufficient quantity of received light must be secured.

In the distance measuring device of Patent Literature 2, by using a demodulation optical modulator, a detector having a large light-receiving diameter in which a response frequency is about MHz can be used. However, since a beam is input into an optical waveguide of the demodulation optical modulator, an effective diameter is several tens of µm.

Accordingly, in the same manner as in Patent Literature 1, except a case where an object has a mirror plane or the like and a return beam having preferable directivity is obtained, the focus position must be changed in accordance with a distance up to the object, a beam must be effectively focused on the light receiver, and the sufficient quantity of received light must be secured.

Except a case where the object has a mirror plane or the like and a return beam having preferable directivity is obtained, the focus position must be changed in accordance with a distance up to the object, a beam must be effectively focused on the light receiver, and the sufficient quantity of received light must be secured. However, when the focus position is adjusted and a focus condition is examined, a time is required to examine the focus condition.

In view of the foregoing, it is an object of the present invention to provide a distance measuring method and a device in which a time required to adjust the focus position is reduced, and a shape measuring device in which the device is installed, by using low-precision range-finding and high-precision range-finding.

### SOLUTION TO PROBLEM

To solve the above-described problems, the present invention provides a distance measuring device as set out in claim 1.

According to another aspect of the present invention, there is provided a distance measuring method as shown in the appended claims.

### ADVANTAGEOUS EFFECTS OF INVENTION

According to the present embodiment, there can be provided a distance measuring method and device in which a time required to adjust a focus position is reduced by using the low-precision range-finding and the high-precision range-finding, and also provided a shape measuring device in which the device is installed.

### BRIEF DESCRIPTION OF DRAWINGS

FIG. 1 is a schematic diagram of a configuration of a distance measuring device using a prism, according to a first embodiment of the present invention;
FIG. 2(a) is a schematic diagram of a configuration of a light source unit according to the first embodiment of the present invention;
FIG. 2(b) is a schematic diagram of a configuration of the light source unit according to the first embodiment of the present invention;
FIG 3 is a schematic diagram of a configuration of a focus unit and a prism according to the first embodiment of the present invention;
FIG. 4 is a schematic diagram of a configuration of the distance measuring device using a hollow lens, according to a second embodiment of the present invention;
FIG 5 is a schematic diagram of a configuration of the focus unit according to the second embodiment of the present invention;
FIG. 6 is a schematic diagram of a configuration of the distance measuring device using a dichroic mirror, according to a third embodiment of the present invention;
FIG 7 is a schematic diagram of a configuration of the distance measuring device using a circulator, according to a fourth embodiment of the present invention;
FIG. 8 is a schematic diagram of a configuration of the distance measuring device using a TOF method for a low-precision range-finding system, according to a fifth embodiment of the present invention;
FIG. 9 is a configuration diagram of a three-dimensional shape measuring device in which any distance measuring device described in the first to fifth embodiments is installed, according to a sixth embodiment of the present invention;
FIG 10 is a flowchart of a three-dimensional shape measurement in which any distance measuring device described in the first to fifth embodiments is used, according to the sixth embodiment of the present invention;
FIG 11(a) is a flowchart of a three-dimensional shape measurement in which any distance measuring device described in the first to fifth embodiments is used, according to the sixth embodiment of the present invention; and
FIG. 11(b) illustrates an example of a measuring object of the three-dimensional shape measurement in which any distance measuring device described in the first to fifth embodiments is used, according to the sixth embodiment of the present invention.

### DESCRIPTION OF EMBODIMENTS

Hereinafter, embodiments of the present invention will be described with reference to the accompanying drawings.

### FIRST EMBODIMENT

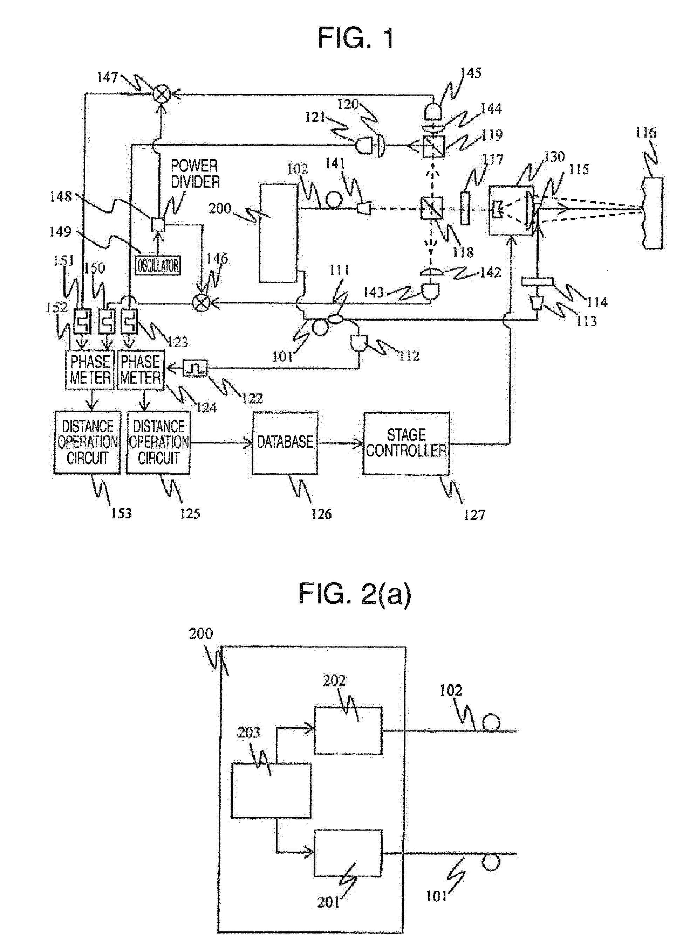

A first embodiment of the present invention will be described with reference to FIGS. 1 to 3.

FIG. 1 is an example of a configuration diagram of a distance measuring device of the present embodiment.

The distance measuring device is configured by performing range-finding by a low-precision range-finding system, adjusting a focus position of a high-precision range-finding system on the basis of results thereof, and then performing the range-finding by the high-precision range-finding system.

The low-precision range-finding system is configured as described below. A low-precision range-finding beam 101 of a part of an output from a light source 200 enters a fiber coupler 111, and is separated into a reference beam which is not irradiated on an object 116 and a measuring beam which is irradiated on the object 116. A part of the low-precision range-finding beam 101 enters a low-precision range-finding light receiver 112 as the reference beam and is photoelectrically converted. A principal part thereof is emitted into a space via a fiber collimator 113 as the measuring beam, transmitted through a quarter-wave plate 114, reflected by a prism 115 as a reflector in which a metal reflecting a range-finding beam such as aluminum is deposited on a surface attached to a front face of a high-precision range-finding laser focus unit 130 that adjusts a focus position of the high-precision range-finding system, and is irradiated on the object 116. The beam is transmitted through the high-precision range-finding laser focus unit 130, transmitted through a quarter-wave plate 117, reflected by a polarizing beam splitter 118, and enters a beam splitter 119. A part of the beam is focused by a lens 120, enters a low-precision range-finding optical receiver 121, and photoelectrically converted. Electric signals that are photoelectrically converted by the low-precision range-finding optical receivers 112 and 121 are selected in their frequency components, for use in the range-finding, by filters 122 and 123, respectively, and the electric signals are input into a phase meter 124. Beat signals for use in the range-finding are changed by changing frequencies that are selected by the filters 122 and 123. A phase difference between signals input into the phase meter 124 is calculated and a distance up to the object 116 is calculated by a distance operation circuit 125.

Results of the above-described low-precision range-finding system are checked with a database 126 which stores a relationship between an inter-lens distance and focus positions of the high-precision range-finding laser focus unit 130. In accordance with the check results, the inter-lens distance of the high-precision range-finding laser focus unit 130 is changed by a stage controller 127 so that a focus of high-precision range-finding beam 102 is matched with a surface of the object 116.

The high-precision range-finding system is configured as described below. The high-precision range-finding beam 102 being a part of the output from the light source 200 is emitted into a space via a fiber collimator 141, enters the polarizing beam splitter 118, and is separated into the reference beam that is not irradiated on the object 116 and the measuring beam that is irradiated on the object 116. A reflected beam by the polarizing beam splitter 118 is focused by a lens 142 as the reference beam and is photoelectrically converted by a high-precision range-finding optical receiver 143 (having a fast response speed and a small light receiving area in comparison to the low-precision range-finding optical receivers 112 and 121). A transmitted beam is transmitted through the quarter-wave plate 117 as the measuring beam and is focused on the object 116 by the high-precision range-finding laser focus unit 130. The focus of the high-precision range-finding beam 102 is positioned on the surface of the object 116, and therefore a part of a return beam from the object 116 is collimated by the high-precision range-finding laser focus unit 130. Then, the part of the return beam is transmitted through the quarter-wave plate 117, reflected by the polarizing beam splitter 118, and enters the beam splitter 119. The transmitted beam is focused by a lens 144 and is photoelectrically converted by a high-precision range-finding optical receiver 145 (having a fast response speed and a small light receiving area in comparison to the low-precision range-finding optical receivers 112 and 121). Here, the light receiving area of the high-precision range-finding optical receiver 145 is small; further, it is small, and therefore the transmitted beam is focused effectively on the high-precision range-finding optical receiver 145 and is changed to a position capable of obtaining the sufficient quantity of received light by the high-precision range-finding laser focus unit 130. The electric signals that are photoelectrically converted by the high-precision range-finding optical receivers 143 and 145 are mixed with an output signal from an oscillator 149 divided by a power divider 148 by mixers 146 and 147, respectively, and are beat down up to a response frequency of the phase meter. In the signals that are beat down by the mixers 146 and 147, frequency components for use in the range-finding are selected by filters 150 and 151, respectively, and the signals of the frequency components are input into a phase meter 152. An oscillating frequency of the oscillator 149 and frequencies selected by the filters 150 and 151 are changed, and thereby the beat signals for use in the range-finding are changed. A phase difference between signals input by the phase meter 152 is calculated, and the distance up to the object 116 is calculated by a distance operation circuit 153.

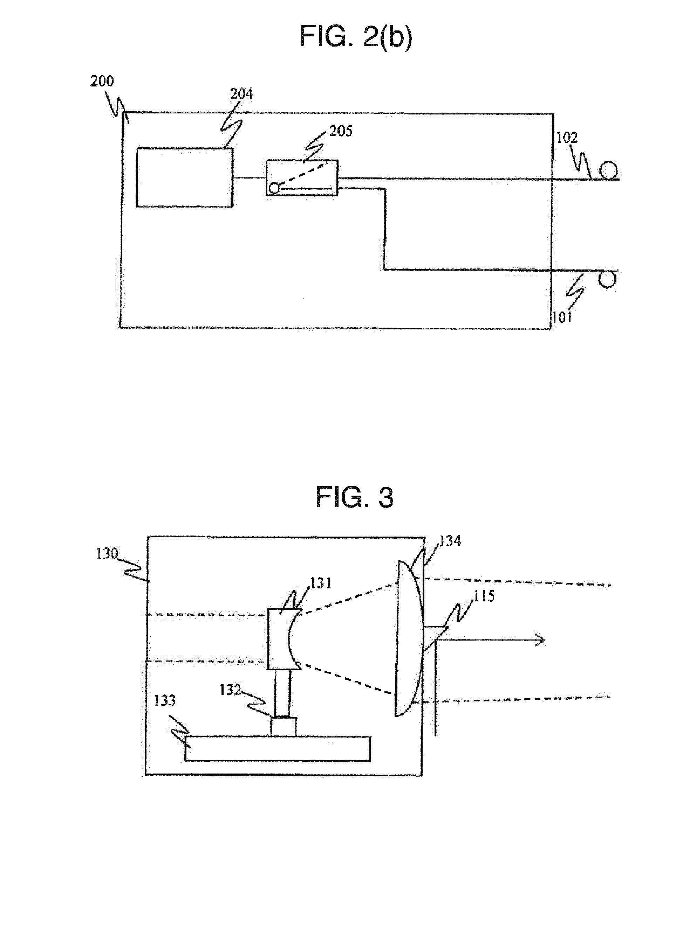

The low-precision range-finding beam 101 and the high-precision range-finding beam 102 being a part of an output from the light source 200 are a laser beam an intensity of which is periodically changed. An intensity change frequency of the high-precision range-finding beam 102 is higher than a modulation frequency of the low-precision range-finding beam 101, and is capable of performing the high-precision range-finding with the same phase measurement precision. A method for using light sources 202 and 201 as illustrated in FIG. 2(a) and switching an on-off state of an output therefrom by a control system 203 is used. The light source 201 includes an intensity modulation beam obtained by modulating a current of an LD (Laser Diode), an intensity modulation beam obtained by intensity-modulating an output beam from the LD by an EO (Electro Optical) modulator or an EA (Electro Absorption) modulator, interference light of a plurality of LDs, an optical frequency comb, and the like. As the light source 202, for performing the range-finding with the precision of several tens of µm in the phase measurement precision of about 2π/100, the intensity change frequency is as high as several tens of GHz, and therefore the intensity modulation beam cannot be used by modulating a current of the LD, and the light source 202 includes the EO modulator, the EA modulator, the interference light of a plurality of LDs, the optical frequency comb, and the like. As illustrated in FIG. 2(b), for example, in the case of using an optical frequency comb 204 including both the high-precision range-finding beam and the low-precision range-finding beam at the same time, both the low-precision range-finding beam 101 and the high-precision range-finding beam 102 can be obtained by switching the output of the comb using an optical switch 205 or the like.

FIG. 3 is an example of a configuration of the focus unit 130 and the prism 115. A lens 131 is fixed on an electric stage 133 by a mounter 132. A distance between the lens 131 and a lens 134 can be changed by the electric stage 133, and a focus position of the high-precision range-finding beam 102 can be changed. The prism 115 is disposed on a front face of the lens 134 so that optical axes of the low-precision range-finding beam 101 and the high-precision range-finding beam 102 are matched with each other. Further, the prism 115 is smaller than a beam diameter of the high-precision range-finding beam 102 in a position of the prism 115. Therefore, a part of the return beam from the object 116 and the high-precision range-finding beam 102 are shielded; however, for example, in the case of using a prism having a size of one tenth of a beam diameter of the high-precision range-finding beam, only about one hundredth of a beam diameter of the return beam is shielded, and therefore there is no problem.

According to the present embodiment, a focus position of the high-precision range-finding can be adjusted on the basis of the results of the low-precision range-finding. Therefore, the measurement time can be largely reduced as compared to a case where a three-dimensional measurement is performed while a distance measurement is performed with high precision and a focus position is adjusted only in the high-precision range-finding system.

### SECOND EMBODIMENT

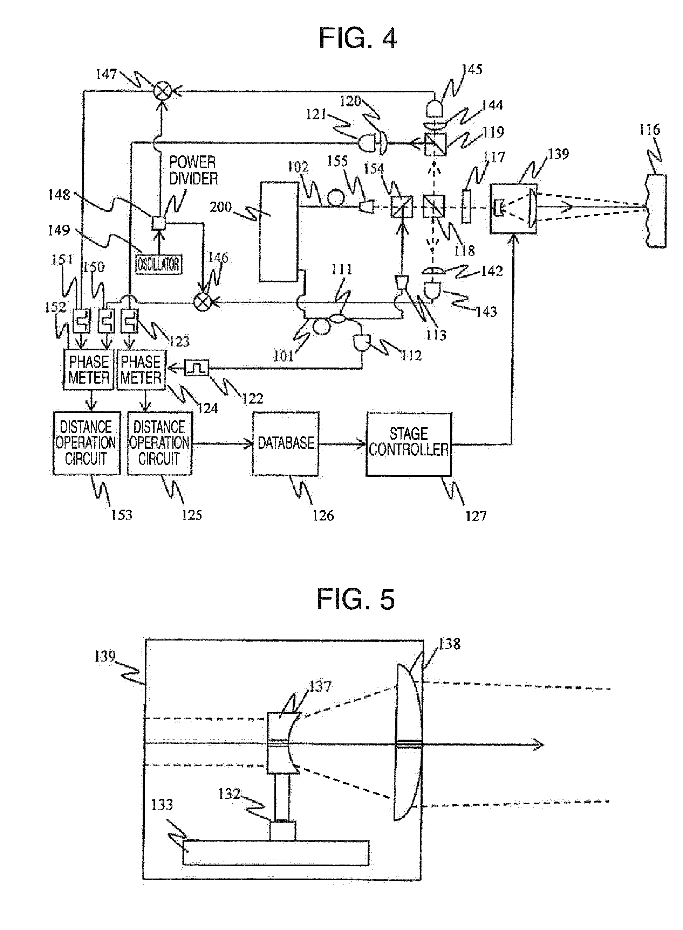

A second embodiment of the present invention will be described with reference to FIGS. 4 and 5.

About a part having the same function as that of the configuration to which the same reference numeral as that illustrated in FIGS. 1 to 3 previously described is given, 30 descriptions will be omitted.

Changes from the first embodiment about the low-precision range-finding system are as described below. In the laser beam that is emitted into a space via the fiber collimator 113, an optical axis of a reflected component (measuring beam) thereof is matched with the after-mentioned high-precision range-finding beam by a beam splitter 154. The laser beam is transmitted through the polarizing beam splitter 118, transmitted through the quarter-wave plate 117, transmitted through a high-precision range-finding laser focus unit 139 that adjusts a focus position, and is irradiated on the object 116. Apart of the return beam from the object 116 is transmitted through the high-precision range-finding laser focus unit 139, and thereafter the distance is calculated by the distance operation circuit 125 through the same process as that of the first embodiment.

Results of the above-described low-precision range-finding system are checked with the database 126 for storing a relationship between the inter-lens distance and the focus positions of the focus unit. In accordance with the results, the inter-lens distance of the high-precision range-finding laser focus unit 139 is changed by the stage controller 127 so that the focus position of the high-precision range-finding beam 102 is matched with the surface of the object 116.

Changes from the first embodiment about the high-precision range-finding system are as described hereinafter. The high-precision range-finding beam 102 is emitted into a space via the fiber collimator 155 so that a beam diameter becomes larger than that of the laser beam from a low-precision range-finding intensity modulation light source. The high-precision range-finding beam 102 is transmitted through a beam splitter 154, enters the polarizing beam splitter 118, and is separated into the reference beam that is not irradiated on the object 116 and the measuring beam that is irradiated on the object 116. Among beams that enters the polarizing beam splitter 118, a reflected beam is focused by the lens 142 as the reference beam and is photoelectrically converted by the high-precision range-finding light receiver 143 (having a fast response speed and a small light receiving area in comparison to the low-precision range-finding light receivers 112 and 121). Further, a transmitted component thereof is transmitted through the quarter-wave plate 117 as the measuring beam, and then is focused on the object 116 by the high-precision range-finding laser focus unit 139. Apart of the return beam from the object 116 is transmitted through the high-precision range-finding laser focus unit 139, and then the distance is calculated by the distance operation circuit 125 through the same process as that of the first embodiment.

FIG 5 is an example of a configuration of the focus unit 139. A hollow lens 137 in which a hole larger than a beam diameter of the low-precision range-finding beam 101 is left centrally is fixed on the electric stage 133 by the mounter 132. By the electric stage 133, a distance between the hollow lens 137 and a hollow lens 138 in which a hole that is larger than the beam diameter of the low-precision range-finding beam 101 and smaller than the beam diameter of the high-precision range-finding beam 102 is left centrally can be changed, and the focus position of the high-precision range-finding beam 102 can be changed. A size of the hole of the hollow lens 137 is made larger than the beam diameter of the low-precision range-finding beam 101 and smaller than the beam diameter of the high-precision range-finding beam 102. As a result, the focus position of the high-precision range-finding beam 102 can be changed without exerting an influence on the low-precision range-finding beam 101.

According to the present embodiment, the prism 115 of the first embodiment need not be attached to the hollow lens 138, and therefore the laser focus unit 139 is easily disposed.

### THIRD EMBODIMENT

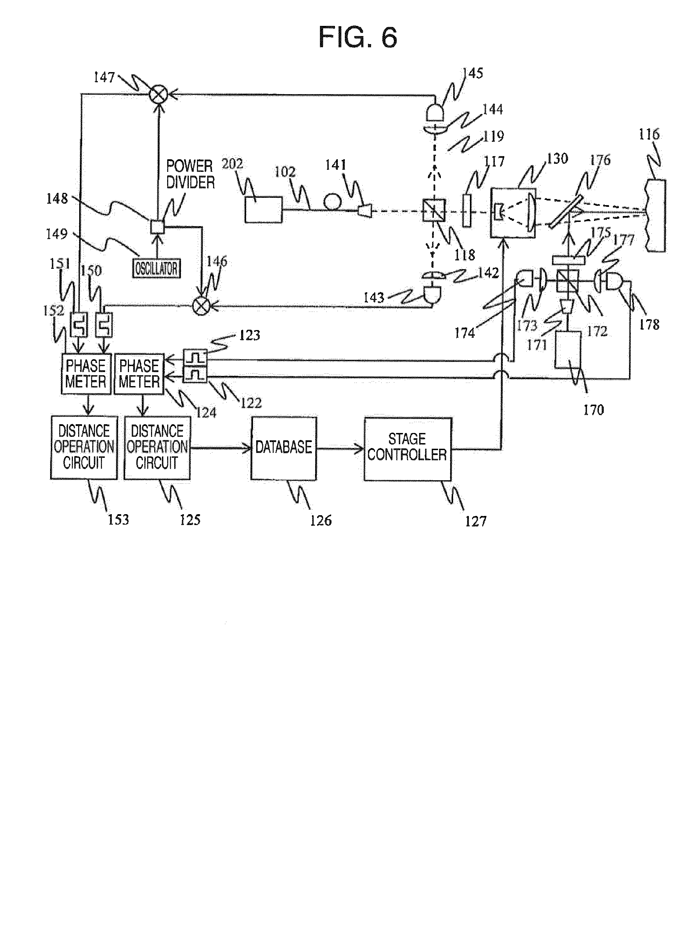

A third embodiment of the present invention will be described with reference to FIG 6.

About a part having the same function as that of the configuration to which the same reference numeral as that illustrated in FIGS. 1 to 5 previously described is given, descriptions will be omitted.

Changes from the first embodiment about the low-precision range-finding system are as described hereinafter. In place of the low-precision range-finding beam 101 of FIG 1, an output of a light source 170 that is different from the high-precision range-finding beam 102 in a wavelength is used. Here, the fact that a wavelength is different indicates a level that a mirror has a characteristic in which a wavelength to be transmitted and that to be reflected are different from each other, for example, a wavelength can be separated into transmission and reflection by a dichroic mirror 176. A laser beam that is emitted from the light source 170 is emitted into a space via a fiber collimator 171 and enters a polarizing beam splitter 172, and is separated into the reference beam that is not irradiated on the object 116 and the measuring beam that is irradiated on the object 116. A part of the laser beam that enters the polarizing beam splitter 172 is reflected and photoelectrically converted as the reference beam by using a lens 173 by a low-precision range-finding optical receiver 174. A principal part thereof is transmitted through the polarizing beam splitter 172, transmitted through a quarter-wave plate 175 as the measuring beam, and then matched with an axis of the high-precision range-finding beam 102 by the dichroic mirror 176, and is irradiated on the object 116. A part of the return beam from the object 116 is reflected by the dichroic mirror 176, transmitted through the quarter-wave plate 175, then reflected by the polarizing beam splitter 172, focused by a lens 177, and is photoelectrically converted by a low-precision range-finding light receiver 178. In the electric signals that are photoelectrically converted by the low-precision range-finding light receivers 174 and 178, frequency components for use in the range-finding by the filters 122 and 123 are selected, and the electric signals enter the phase meter 124. A subsequent process is the same as that of the first embodiment.

Results of the above-described low-precision range-finding system are checked with the database 126 for storing a relationship between the inter-lens distance and the focus positions of the focus unit. In accordance with the results, the inter-lens distance of the focus unit 130 is changed by the stage controller 127 so that the focus of the high-precision range-finding beam 102 is matched with the surface of the object 116.

Changes from the first embodiment about the high-precision range-finding system are as described hereinafter. The high-precision range-finding system is the same as that of the first embodiment except that the dichroic mirror 176 is used in place of the prism 115 of FIG. 1. Through the same process as that of the first embodiment, the high-precision range-finding beam 102 being a part of an output from the light source 202 is transmitted through the dichroic mirror 176 via the focus unit 130, and then is focused on the object 116. A part of the return beam from the object 116 is transmitted through the dichroic mirror 176 and is collimated by the high-precision range-finding laser focus unit 130. Thereafter, through the same process as that of the first embodiment, the distance is calculated by the distance operation circuit 152. Since a wavelength of the laser beam of the high-precision range-finding beam 102 is transmitted through the dichroic mirror 176, the laser beam can be detected reducing a loss thereof.

### FOURTH EMBODIMENT

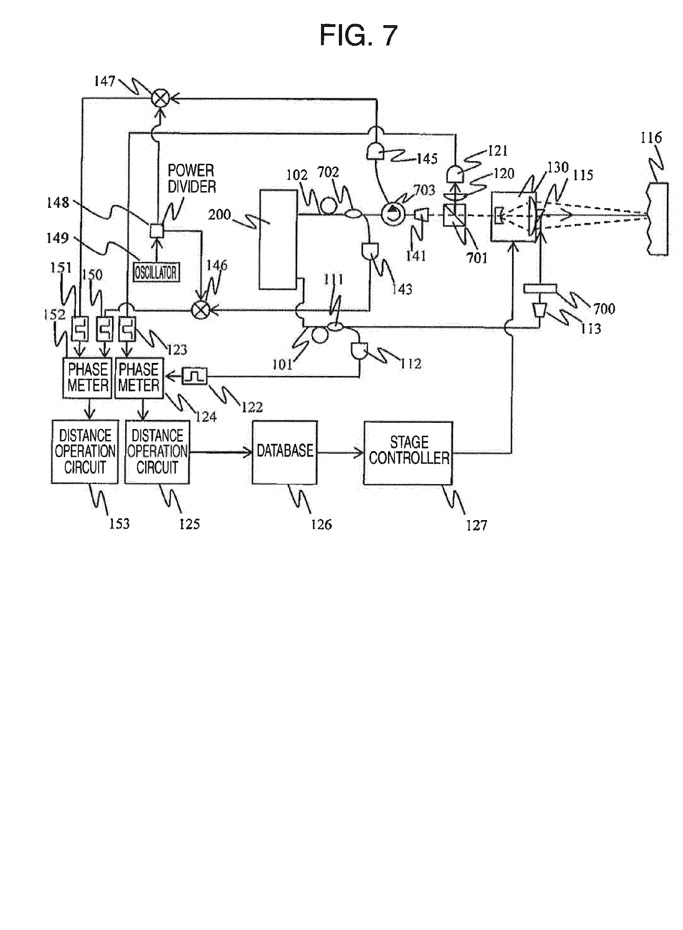

A fourth embodiment of the present invention will be described with reference to FIG. 7.

About a part having the same function as that of the configuration to which the same reference numeral as that illustrated in FIGS. 1 to 6 previously described is given, descriptions will be omitted.

Changes from the first embodiment about the low-precision range-finding system are as described hereinafter. The low-precision range-finding beam 101 being a part of the output from the light source 200 enters the fiber coupler 111. A part thereof enters the low-precision range-finding light receiver 112 as the reference beam, and is photoelectrically converted. A principal part thereof is emitted into a space via the fiber collimator 113 as the measuring beam, changed to a polarizing direction to be reflected by a polarizing beam splitter 701 via a half-wave plate 700, reflected by the prism 115 in which a metal reflecting the range-finding beam such as aluminum is deposited on the surface that is attached to the front face of the high-precision range-finding laser focus unit 130, and is irradiated on the object 116.A part of the return beam from the object 116 is transmitted through the high-precision range-finding laser focus unit 130, reflected by the polarizing beam splitter 701, focused by the lens 120, and photoelectrically converted by the low-precision range-finding light receiver 121. In the electric signals that are photoelectrically converted by the low-precision range-finding light receivers 112 and 121, through the same process as that of the first embodiment, the distance up to the object 116 is calculated by the distance operation circuit 125.

Results of the above-described low-precision range-finding system are checked with the database 126 for storing a relationship between the inter-lens distance and the focus positions of the focus unit. In accordance with the results, the inter-lens distance of the focus unit 130 is changed by the stage controller 127 so that the focus of the high-precision range-finding beam 102 is matched with the surface of the object 116.

Changes from the first embodiment about the high-precision range-finding system are as described hereinafter. The high-precision range-finding beam 102 being a part of the output from the light source 200 enters a fiber coupler 702, and is separated into the reference beam that is not irradiated on the object 116 and the measuring beam that is irradiated on the object 116. A part of the high-precision range-finding beam 102 that enters the fiber coupler 702 enters the high-precision range-finding light receiver 143 as the reference beam, and is photoelectrically converted. A principal part thereof enters a circulator 703 (disposed so that a beam is transmitted only in the direction from the fiber coupler 702 to the fiber collimator 141 as well as from the fiber collimator 141 to the high-precision range-finding light receiver 145) as the measuring beam, and is emitted into a space via the fiber collimator 141, transmitted through the polarizing beam splitter 701, and is focused on the object 116 by the high-precision range-finding laser focus unit 130. Since the focus of the high-precision range-finding beam 102 is positioned on the surface of the object 116, a part of the return beam from the object 116 is collimated by the high-precision range-finding laser focus unit 130, enters an optical fiber via the fiber collimator 141, enters the circulator 703, and is photoelectrically converted by the high-precision range-finding light receiver 145. In the electric signals that are photoelectrically converted by the high-precision range-finding light receivers 143 and 145, through the same process as that of the first embodiment, the distance up to the object 116 is calculated by the distance operation circuit 153.

According to the present embodiment, as compared to the first embodiment, lots of parts to be configured by fibers are present and the lens 120 of the first embodiment is not required. Further, an adjustment of the polarizing beam splitter 118, the beam splitter 119, and the lens 120 is not required, and therefore a device configuration becomes simple, and an adjustment and the like are simplified.

### FIFTH EMBODIMENT

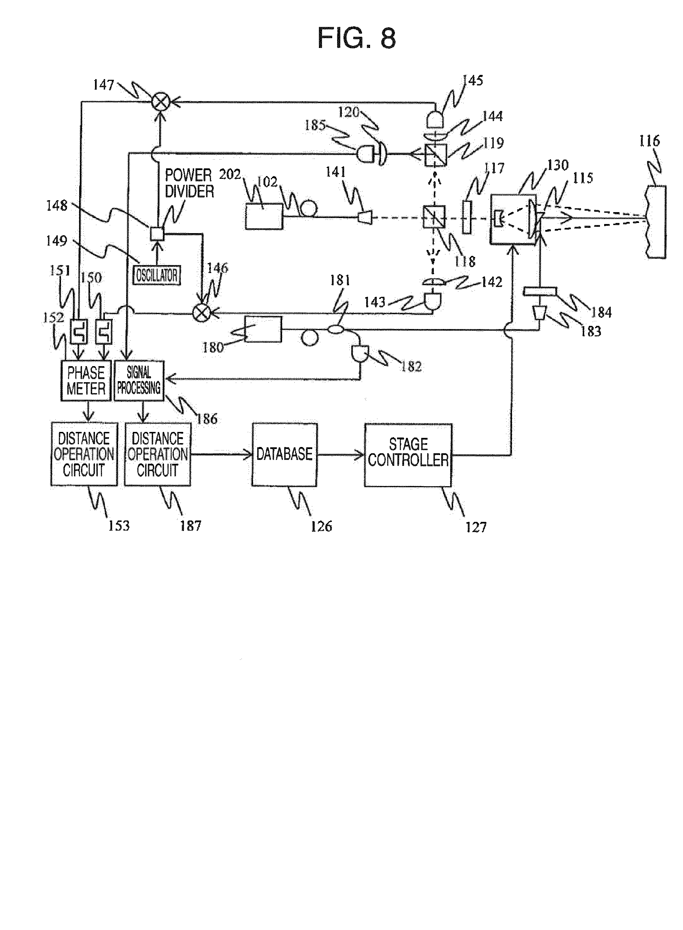

In the present embodiment, the embodiment of using a TOF (Time Of Flight) method in which a distance is not measured on the basis of a phase of the intensity changing period as the low-precision range-finding system but a beam is irradiated on an object and a distance is measured on the basis of the time until which the beam is returned will be described with reference to FIG. 8. About a part having the same function as that of the configuration to which the same reference numeral as that illustrated in FIGS. 1 to 7 previously described is given, descriptions will be omitted.

Changes from the first embodiment about the low-precision range-finding system are as described hereinafter. An output from a light source for the TOF method, for example, a pulse light source 180 is separated by a fiber coupler 181. Apart thereof is photoelectrically converted by a light receiver 182 as the reference beam. A principal part thereof is emitted into a space via a fiber collimator 183 as the measuring beam, transmitted through a quarter-wave plate 184, reflected by the prism 115 that is attached to the front face of the high-precision range-finding laser focus unit 130, and is irradiated on the object 116. A part of the return beam from the object 116 is transmitted through the high-precision range-finding laser focus unit 130, transmitted through the quarter-wave plate 117, reflected by the polarizing beam splitter 118, and enters the beam splitter 119. A part thereof is focused by the lens 120, enters a low-precision range-finding light receiver 185, and is photoelectrically converted. The electric signals that are photoelectrically converted by the low-precision range-finding light receivers 182 and 185 are input into a signal processing circuit 186, and a difference between the arrival times is obtained. The distance is calculated by a distance operation circuit 187 on the basis of the results.

A subsequent process is the same as that of the first embodiment.

Changes from the first embodiment about the high-precision range-finding system are as described hereinafter. In the high-precision range-finding beam 102 being an output from the light source 202, through the same process as that of the first embodiment, the distance is calculated by the distance operation circuit 152.

Since the TOF method is not a method for measuring a distance on the basis of the phase of the intensity changing period, there is no restriction that only a distance of one period in the intensity change can be measured. Accordingly, in the case of using the TOF method, even when a distance up to the object 116 is separate, an absolute distance can be calculated.

### SIXTH EMBODIMENT

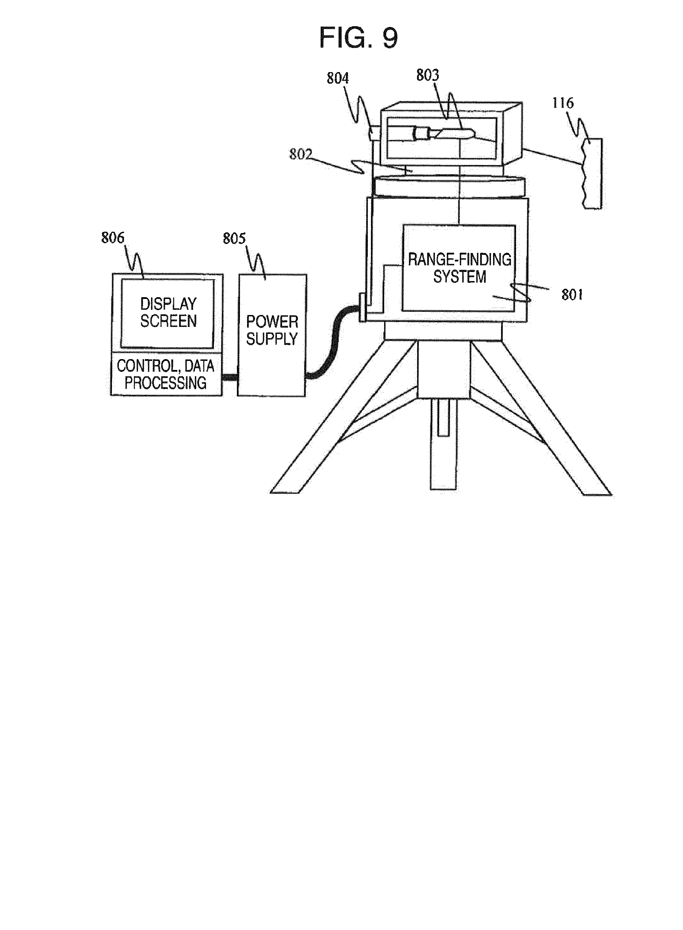

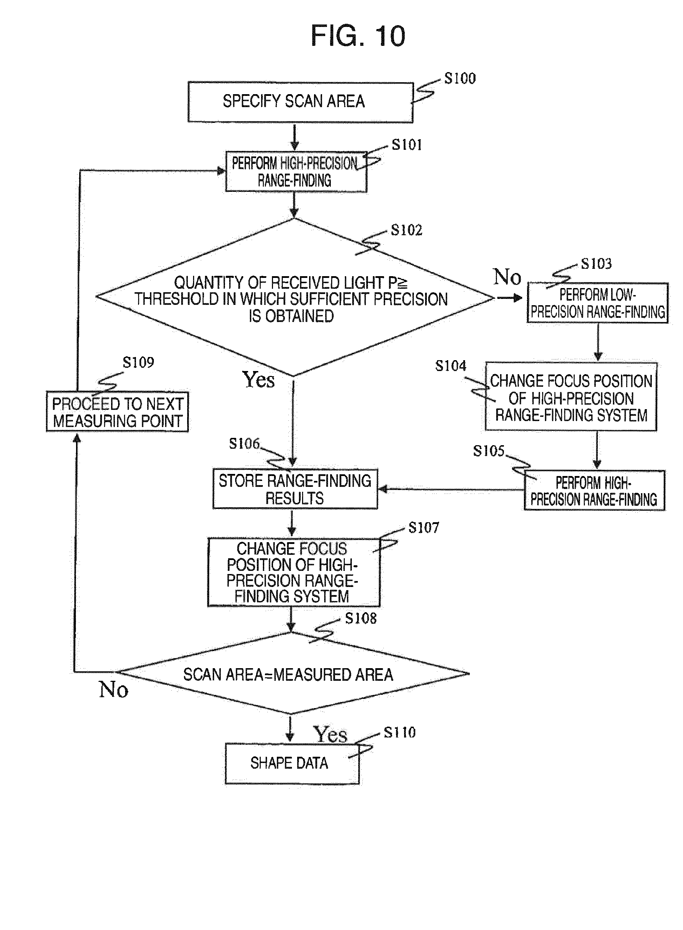

In the present embodiment, the embodiment of a measuring flow and a three-dimensional shape measuring device in which any range-finding system 801 described in the first to fifth embodiments is installed will be described with reference to FIGS. 9 and 10.

The three-dimensional shape measuring device range-finding system 801 in which the range-finding system 801 is installed is illustrated in FIG. 9. A laser beam emitted from the range-finding system 801 is irradiated on the object 116 by a mirror 803 installed on a hollow motor 802. Abeam can be two-dimensionally scanned by the hollow motor 802 and a galvanoscanner 804, and a three-dimensional shape measurement can be performed. The three-dimensional shape measuring device includes the hollow motor, the galvanoscanner, a power supply unit 805 of the measurement system, and a GUI (Graphical User Interface) unit 806 for displaying the scanner, control of the range-finding system, data processing, and the measurement results.

A shape measurement flow of FIG. 10 will be described. In the shape measuring flow of FIG. 10, an operation in which with respect to one measuring point, after the low-precision range-finding is performed, a focus position of the high-precision range-finding is adjusted and the high-precision range-finding is performed is repeated in each measuring point.

A scan area is specified (S100), the high-precision range-finding is performed with respect to one measuring point in the area (S101), whether a quantity of received light P is 'more than or equal to' or 'less than or equal to' a threshold in which sufficient precision is obtained is determined (S102), and whether measurement results are used is determined. If the quantity of received light is less than or equal to the threshold, the sufficient precision is not obtained. Therefore, the low-precision range-finding is performed (S103), the focus position of the high-precision range-finding system is changed in accordance with results thereof (S104), the high-precision range-finding is performed again (S105), and the range-finding results are kept (S106). If the quantity of received light is more than or equal to the threshold, the sufficient precision is obtained. Therefore, the range-finding results are kept (S106), and the focus position of the high-precision range-finding system is changed in accordance with the results (S107). Whether the specified scan area and the measured area are equal to each other is determined (S108). If they are different from each other, the process proceeds to the next measuring point (S109), and the high-precision range-finding is performed again (S101). A loop from the S101 to the S 109 is repeated until the specified scan area and the measured area are equal to each other. When the specified scan area and the measured area are equal to each other, shape data is obtained (S110). A process in which the focus position of the high-precision range-finding system is changed in accordance with the range-finding results (S 107) can be omitted. However, by performing this process, when a change in the distance between a certain measuring point and the next measuring point is small, the number of times to perform the low-precision range-finding (S 103) is reduced.

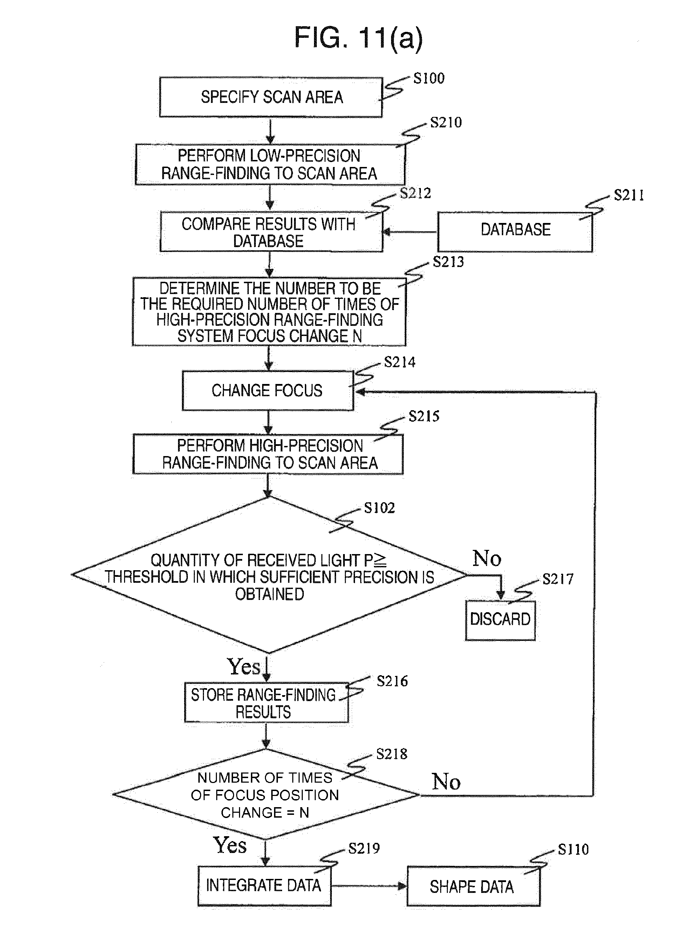

An embodiment of a measuring flow that is different from the shape measuring flow described in FIG. 10 will be described with reference to FIG. 11 (a). In the shape measuring flow of FIG. 11 (a), while the low-precision range-finding is performed with respect to a plurality of measuring points and then the focus position of the high-precision range-finding is adjusted in a plurality of stages, the high-precision range-finding is performed with respect to the plurality of measuring points.

The scan area is specified (S100), the range-finding is performed with respect to the whole specified scan area with the low precision (S210), results thereof are compared with the database (S211) for storing a relationship between the inter-lens distance and the focus positions of the focus unit (S212), the results are classified into the areas capable of being measured by the same focus, and the number of the classifications is determined to be the required number of times of high-precision range-finding system focus change N (S213). The focus positions are changed (S214), the high-precision range-finding is performed with respect to the whole specified scan area (S215), and whether the quantity of received light P is 'more than or equal to' or 'less than or equal to' the threshold in which the sufficient precision is obtained is determined (S102). If the quantity of received light P is more than or equal to the threshold, the range-finding results are kept (S216), and If the quantity of received light P is less than or equal to the threshold, the range-finding results are discarded (S217). Whether the number of times of focus position change and the required number of times of high-precision range-finding system focus change N are equal to each other is determined (S218). If they are different from each other, a process from S214 to S218 is repeated, and if they are equal to each other, the kept range-finding results are integrated (S219), and the shape data is obtained (S110). On the occasion of the integration, when a plurality of the range-finding results are kept with respect to the same measuring point, any result may be selected.

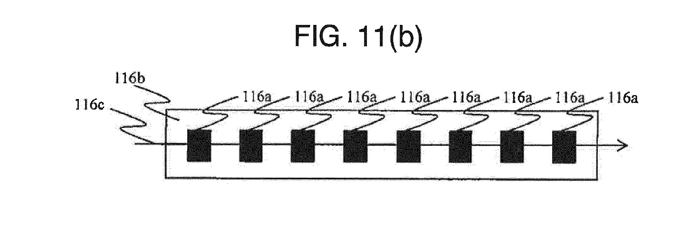

A measuring speed of the scanning method described in FIGS. 10 and 11A depends on a shape of the object. For example, in the case where the object has a smooth shape, the required number of times of high-precision range-finding system focus change N is large and the number of times to perform the low-precision range-finding is small, and therefore a flow described in FIG. 10 is fast. Suppose, for example, that an object in which a pattern having the same height of 116a is repeated on the same plane of 116b as illustrated in FIG. 11(b) is scanned in a path of 116c. In this case, in the flow described in FIG. 10, a time to change the focus position is required on a boundary between the areas 116a and 116b. In the flow described in FIG. 11(a), since the required number of times high-precision range-finding system focus change N is small, the flow described in FIG. 11(a) may be faster than that of FIG. 11(b) in the measuring speed. The flow of FIG. 10 or 11 is supposed to be able to be selected by the user.

In should be noted that any of the above-described embodiments are merely concrete examples to implement the present invention, and it is to be understood that the technical scope of the present invention will not be construed restrictively by these embodiments. In other words, the present invention can be realized in various forms without departing from features thereof. Further, the invention may be practiced by combining the first to the sixth embodiments.

### REFERENCE SIGNS LIST

101...Low-precision range-finding beam
102...High-precision range-finding beam
111...Fiber coupler
112... Light receiver
113...Fiber collimator
114... Quarter-wave plate
115...Prism
116...Object
117... Quarter wavelength
118...Polarizing beam splitter
119...Beam splitter
120...Lens
121...Light receiver
122, 123... Variable filter
124...Phase meter
125...Distance operation circuit
126... Database
127... Stage controller
130...Focus unit
131...Lens
132... Mounter
133...Electric stage
134...Lens
137...Hollow lens
138...Hollow lens
139...Focus unit
141...Fiber collimator
142...Lens
143...Light receiver
144...Lens
145...Light receiver
146, 147...Mixer
148...Power divider
149... Oscillator
150, 151... Variable filter
152...Phase meter
153...Distance operation circuit
154...Beam splitter
155...Fiber collimator
170...Light source
172...Polarizing beam splitter
173...Lens
174... Light receiver
175... Quarter-wave plate
176...Dichroic mirror
177...Lens
178...Light receiver
180...Pulse light source
181...Fiber coupler
182...Light receiver
183...Fiber collimator
184...Quarter-wave plate
185...Light receiver
186... Signal processing
187...Distance operation circuit
200...Light source
201...Low-precision range-finding light source
202...High-precision range-finding light source
203...Control unit
204...Optical frequency comb
205... Optical switch
700...Half-wave plate
701...Polarizing beam splitter
702...Fiber coupler
703... Circulator
801...Range-finding system
802...Hollow motor
803... Mirror
804... Galvanoscanner
805...Power supply unit
806...GUI

## Claims

1. A distance measuring device for measuring the distance to an object (116) comprising:
a high-precision range-finding system including a laser focus unit (130), the high-precision range-finding system being arranged to separate a beam (102) from a first light source (202) into a first reference beam which is not irradiated on the object (116) and a first measuring beam which is irradiated on the object (116) via the laser focus unit (130) which is controllable to adjust a focus position of the first measuring beam, and arranged to measure a distance up to the object (116) from a phase difference between the first reference beam and the first measuring beam reflected from the object (116);
a low-precision range-finding system arranged to separate a beam (101) from a second light source (201), having a frequency lower than that of the first light source, into a second reference beam which is not irradiated on the object (116) and a second measuring beam which is irradiated on the object (116), and arranged to measure a distance up to the object (116) from a phase difference or an arrival time difference between the second reference beam and the second measuring beam reflected from the object (116); and
focus position adjustment means arranged to control the laser focus unit (130) to adjust the focus position of the first measuring beam on the basis of a result of the low-precision range-finding system.

2. The distance measuring device according to claim 1, wherein
the first measuring beam and the second measuring beam are irradiated on the object (116) with optical axes thereof matched with each other.

3. The distance measuring device according to claim 2, wherein
in the laser focus unit (130), a reflector having a diameter that is smaller than that of the first measuring beam is used.

4. The distance measuring device according to claim 2, wherein
in the laser focus unit (130), a hollow lens having a diameter that is smaller than that of the first measuring beam and is larger than that of the second measuring beam is used.

5. The distance measuring device according to claim 2, wherein
a wavelength of the beam (102) from the first light source (202) and a wavelength of the beam (101) from the second light source (201) are configured to be different from each other, and a mirror in which a reflectance and a transmittance are different depending on a wavelength is used.

6. The distance measuring device according to claim 1, wherein
the high-precision range-finding system includes a first fiber coupler that separates into the first reference beam and the first measuring beam, and
the low-precision range-finding system includes a second fiber coupler that separates into the second reference beam and the second measuring beam.

7. A shape measuring device comprising:
a distance measuring device according to claim 1;
a scanner (804) that scans a measured area; and
a GUI (806) that displays a measurement result.

8. A distance measuring method for measuring the distance to an object (116) by means of a distance measuring device comprising the steps of:
in a high-precision range-finding system , comprised in the distance measuring device and including a laser focus unit 130) : separating a beam (102) from a first light source (202) into a first reference beam which is not irradiated on the object (116) and a first measuring beam which is irradiated on the object (116) via the laser focus unit (130) that adjusts a focus position of the first measuring beam, and measuring a distance up to the object (116) from a phase difference between the first reference beam and the first measuring beam, reflected from the object (116); and
in a low-precision range-finding system, comprised in the distance measuring device: separating a beam (101) from a second light source (201), having a frequency lower than that of the first light source, into a second reference beam which is not irradiated on the object (116) and a second measuring beam which is irradiated on the object (116), and measuring a distance up to the object (116) from a phase difference or an arrival time difference between the second reference beam and the second measuring beam reflected from the object (116), wherein a focus position of the first measuring beam is adjusted on the basis of a result of the low-precision range-finding system.

9. The distance measuring method according to claim 8, wherein
the first measuring beam and the second measuring beam are irradiated on the object (116) with optical axes thereof matched with each other.

10. The distance measuring method according to claim 9, wherein
in the laser focus unit (130), a reflector having a diameter smaller than that of the first measuring beam is used.

11. The distance measuring method according to claim 9, wherein
in the laser focus unit (130), a hollow lens having a diameter smaller than that of the first measuring beam and larger than that of the second measuring beam is used.

12. The distance measuring method according to claim 9, wherein
a wavelength of a beam (102) from the first light source (202) and that of a beam (101) from the second light source (201) are allowed to be different from each other, and a mirror in which a reflectance and a transmittance are different depending on a wavelength is used.

13. The distance measuring method according to claim 8, wherein
the low-precision range-finding is performed with respect to one measuring point, a focus position of the high-precision range-finding is adjusted, and an operation to perform the high-precision range-finding is repeated.

14. The distance measuring method according to claim 8, wherein
the low-precision range-finding is performed with respect to a plurality of measuring points, a focus position of the high-precision range-finding is adjusted, and the high-precision range-finding is performed with respect to the plurality of measuring points.

## Patentansprüche

1. Abstandsmessvorrichtung zum Messen des Abstands zu einem Objekt (116), mit
einem Hochpräzisions-Bereichsbestimmungssystem mit einer Laserfokussiereinheit (130), wobei das Hochpräzisions-Bereichsbestimmungssystem dazu ausgelegt ist, einen Strahl (102) aus einer ersten Lichtquelle (202) in einen ersten Referenzstrahl, der nicht auf das Objekt (116) gestrahlt wird, und einen ersten Messstrahl zu trennen, der über die Laserfokussiereinheit (130), die zum Anpassen einer Fokussierposition des ersten Messstrahls steuerbar ist, auf das Objekt (116) gestrahlt wird, und das dazu ausgelegt ist, einen Abstand bis zu dem Objekt (116) aus einer Phasendifferenz zwischen dem ersten Referenzstrahl und dem ersten durch das Objekt (116) reflektierten Messstrahl zu messen,
einem Niedrigpräzisions-Bereichsbestimmungssystem zum Trennen eines Strahls (101) aus einer zweiten Lichtquelle (201), die eine niedrigere Frequenz aufweist als die erste Lichtquelle, in einen zweiten Referenzstrahl, der nicht auf das Objekt (116) gestrahlt wird, und einen zweiten Messstrahl, der auf das Objekt (116) gestrahlt wird, und das dazu ausgelegt ist, einen Abstand bis zu dem Objekt (116) aus einer Phasendifferenz oder einer Ankunftszeitdifferenz zwischen dem zweiten Referenzstrahl und dem zweiten von dem Objekt (116) reflektieren Messstrahl zu messen, und
einer Fokuspositionanpasseinrichtung, die dazu ausgelegt ist, die Laserfokussiereinheit (130) so zu steuern, dass die Fokusposition des ersten Messstrahls auf Basis eines Ergebnisses des Niedrigpräzisions-Bereichsbestimmungssystems angepasst wird.

2. Abstandsmessvorrichtung nach Anspruch 1, wobei der erste Messstrahl und der zweite Messstrahl mit miteinander übereinstimmenden optischen Achsen auf das Objekt (116) gestrahlt werden.

3. Abstandsmessvorrichtung nach Anspruch 2, wobei in der Laserfokussiereinheit (130) ein Reflektor benutzt wird, dessen Durchmesser kleiner ist als der des ersten Messstrahls.

4. Abstandsmessvorrichtung nach Anspruch 2, wobei in der Laserfokussiereinheit (130) eine Hohllinse benutzt wird, deren Durchmesser kleiner ist als der des ersten Messstrahls und größer als der des zweiten Messstrahls.

5. Abstandsmessvorrichtung nach Anspruch 2, wobei eine Wellenlänge des Strahls (102) aus der ersten Lichtquelle (202) und eine Wellenlänge des Strahls (101) aus der zweiten Lichtquelle (201) dazu konfiguriert sind, verschieden voneinander zu sein, und ein Spiegel benutzt wird, dessen Reflexions- und Transmissionsvermögen abhängig von einer Wellenlänge verschieden sind.

6. Abstandsmessvorrichtung nach Anspruch 1, wobei
das Hochpräzisions-Bereichsbestimmungssystem eine erste Faserkopplungseinheit aufweist, die in den ersten Referenzstrahl und den zweiten Referenzstrahl aufspaltet, und
das Niedrigpräzisions-Bereichsbestimmungssystem eine zweite Faserkopplungseinheit aufweist, die in den zweiten Referenzstrahl und den zweiten Messstrahl aufspaltet.

7. Formmessvorrichtung mit
einer Abstandsmessvorrichtung nach Anspruch 1,
einer Abtasteinheit (804), die einen Messbereich abtastet, und
einem GUI (806), das ein Messergebnis anzeigt.

8. Abstandsmessverfahren zum Messen des Abstands zu einem Objekt (116) mittels einer Abstandsmessvorrichtung, wobei in dem Verfahren
in einem Hochpräzisions-Bereichsbestimmungssystem, das in der Abstandsmessvorrichtung enthalten ist und eine Laserfokussiereinheit (130) aufweist: ein Strahl (102) aus einer ersten Lichtquelle (202) in einen ersten Referenzstrahl, der nicht auf das Objekt (116) gestrahlt wird, und einen ersten Messstrahl getrennt wird, der über die Laserfokussiereinheit (130), die eine Fokusposition des ersten Messstrahls anpasst, auf das Objekt (116) gestrahlt wird, und ein Abstand bis zu dem Objekt (116) aus einer Phasendifferenz zwischen dem ersten Referenzstrahl und dem ersten von dem Objekt (116) reflektierten Messstrahl gemessen wird, und
in einem Niedrigpräzisions-Bereichsbestimmungssystem, das in der Abstandsmessvorrichtung enthalten ist: ein Strahl (101) aus einer zweiten Lichtquelle (201), die eine niedrigere Frequenz aufweist als die erste Lichtquelle, in einen zweiten Referenzstrahl, der nicht auf das Objekt (116) gestrahlt wird, und einen zweiten Messstrahl, der auf das Objekt (116) gestrahlt wird, getrennt wird, und ein Abstand bis zu dem Objekt (116) aus einer Phasendifferenz oder einer Ankunftszeitdifferenz zwischen dem zweiten Referenzstrahl und dem zweiten von dem Objekt (116) reflektierten Messstrahl gemessen wird, wobei
eine Fokusposition des ersten Messstrahls auf Basis eines Ergebnisses des Niedrigpräzisions-Bereichsbestimmungssystems angepasst wird.

9. Abstandsmessverfahren nach Anspruch 8, wobei der erste Messstrahl und der zweite Messstrahl mit miteinander übereinstimmenden optischen Achsen auf das Objekt (116) gestrahlt werden.

10. Abstandsmessverfahren nach Anspruch 9, wobei in der Laserfokussiereinheit (130) ein Reflektor benutzt wird, dessen Durchmesser kleiner ist als der des ersten Messstrahls.

11. Abstandsmessverfahren nach Anspruch 9, wobei in der Laserfokussiereinheit (130) eine Hohllinse benutzt wird, deren Durchmesser kleiner ist als der des ersten Messstrahls und größer als der des zweiten Messstrahls.

12. Abstandsmessverfahren nach Anspruch 9, wobei eine Wellenlänge eines Strahls (102) aus der ersten Lichtquelle (202) und eine Wellenlänge eines Strahls (101) aus der zweiten Lichtquelle (201) verschieden voneinander sein dürfen, und ein Spiegel benutzt wird, dessen Reflexions- und Transmissionsvermögen abhängig von einer Wellenlänge verschieden sind.

13. Abstandsmessverfahren nach Anspruch 8, wobei der Niedrigpräzisions-Bereichsbestimmungsprozess bezüglich eines Messpunkts durchgeführt wird, eine Fokusposition des Hochpräzisions-Bereichsbestimmungsprozesses angepasst wird, und ein Betrieb zum Durchführen des Hochpräzisions-Bereichsbestimmungsprozesses wiederholt wird.

14. Abstandsmessverfahren nach Anspruch 8, wobei der Niedrigpräzisions-Bereichsbestimmungsprozess bezüglich mehrerer Messpunkte durchgeführt wird, eine Fokusposition des Hochpräzisions-Bereichsbestimmungsprozesses angepasst wird, und der Hochpräzisions-Bereichsbestimmungsprozess bezüglich der mehreren Messpunkte durchgeführt wird.

## Revendications

1. Dispositif de mesure de distance pour mesurer la distance jusqu'à un objet (116) comportant :
un système de télémétrie de haute précision comprenant une unité de focalisation laser (130), le système de télémétrie de haute précision étant conçu pour séparer un faisceau (102) d'une première source de lumière (202) en un premier faisceau de référence qui n'est pas irradié sur l'objet (116) et en un premier faisceau de mesure qui est irradié sur l'objet (116) via l'unité de focalisation laser (130) qui peut être commandée pour réguler une position de focalisation du premier faisceau de mesure, et conçu pour mesurer une distance jusqu'à l'objet (116) à partir d'une différence de phase entre le premier faisceau de référence et le premier faisceau de mesure réfléchi par l'objet (116),
un système de télémétrie de basse précision conçu pour séparer un faisceau (101) d'une seconde source de lumière (201), ayant une fréquence inférieure à celle de la première source de lumière, en un second faisceau de référence qui n'est pas irradié sur l'objet (116) et en un second faisceau de mesure qui est irradié sur l'objet (116), et conçu pour mesurer une distance jusqu'à l'objet (116) depuis une différence de phase ou une différence d'heure d'arrivée entre le second faisceau de référence et le second faisceau de mesure réfléchi par l'objet (116), et
des moyens de réglage de position de focalisation conçus pour commander l'unité de focalisation laser (130) pour régler la position de focalisation du premier faisceau de mesure sur la base d'un résultat du système de télémétrie de basse précision.

2. Dispositif de mesure de distance selon la revendication 1, dans lequel
le premier faisceau de mesure et le second faisceau de mesure sont irradiés sur l'objet (116) avec des axes optiques correspondant qui concordent entre eux.

3. Dispositif de mesure de distance selon la revendication 2, dans lequel
dans l'unité de focalisation laser (130), un réflecteur ayant un diamètre qui est inférieur à celui du premier faisceau de mesure est utilisé.

4. Dispositif de mesure de distance selon la revendication 2, dans lequel
dans l'unité de focalisation laser (130), une lentille creuse ayant un diamètre qui est inférieur à celui du premier faisceau de mesure et est supérieur à celui du second faisceau de mesure est utilisé.

5. Dispositif de mesure de distance selon la revendication 2, dans lequel
une longueur d'onde du faisceau (102) depuis la première source de lumière (202) et une longueur d'onde du faisceau (101) depuis la seconde source de lumière (201) sont configurées pour être différentes l'une de l'autre, et un miroir dans lequel un facteur de réflexion et un facteur de transmission sont différents en fonction d'une longueur d'onde est utilisé.

6. Dispositif de mesure de distance selon la revendication 1, dans lequel
le système de télémétrie de haute précision comprend un premier coupleur à fibre qui sépare en le premier faisceau de référence et en le premier faisceau de mesure, et
le système de télémétrie de basse précision comprend un second coupleur à fibre qui sépare en le second faisceau de référence et en le second faisceau de mesure.

7. Dispositif de mesure de forme comportant :
un dispositif de mesure de distance selon la revendication 1,
un scanner (804) qui balaie une zone mesurée, et
une interface graphique utilisateur GUI (806) qui affiche un résultat de mesure.

8. Procédé de mesure de distance pour mesurer la distance jusqu'à un objet (116) par l'intermédiaire d'un dispositif de mesure de distance comportant les étapes consistant à :
dans un système de télémétrie de haute précision, compris dans le dispositif de mesure de distance et comprenant une unité de focalisation laser (130) : séparer un faisceau (102) d'une première source de lumière (202) en un premier faisceau de référence qui n'est pas irradié sur l'objet (116) et en un premier faisceau de mesure qui est irradié sur l'objet (116) via l'unité de focalisation laser (130) qui règle une position de focalisation du premier faisceau de mesure, et mesurer une distance jusqu'à l'objet (116) à partir d'une différence de phase entre le premier faisceau de référence et le premier faisceau de mesure, réfléchi par l'objet (116), et
dans un système de télémétrie de basse précision, compris dans le dispositif de mesure de distance :
séparer un faisceau (101) d'une seconde source de lumière (201), ayant une fréquence inférieure à celle de la première source de lumière, en un second faisceau de référence qui n'est pas irradié sur l'objet (116) et en un second faisceau de mesure qui est irradié sur l'objet (116), et mesurer une distance jusqu'à l'objet (116) à partir d'une différence de phase ou d'une différence d'heures d'arrivée entre la second faisceau de référence et le second faisceau de mesure réfléchi par l'objet (116), dans lequel
une position de focalisation du premier faisceau de mesure est réglée sur la base d'un résultat du système de télémétrie de basse précision.

9. Procédé de mesure de distance selon la revendication 8, dans lequel
le premier faisceau de mesure et le second faisceau de mesure sont irradiés sur l'objet (116) avec des axes optiques correspondant qui concordent entre eux.

10. Procédé de mesure de distance la revendication 9, dans lequel
dans l'unité de focalisation laser (130), un réflecteur ayant un diamètre inférieur à celui du premier faisceau de mesure est utilisé.

11. Procédé de mesure de distance selon la revendication 9, dans lequel
dans l'unité de focalisation laser (130), une lentille creuse ayant un diamètre inférieur à celui du premier faisceau de mesure et supérieur à celui du second faisceau de mesure est utilisée.

12. Procédé de mesure de distance selon la revendication 9, dans lequel
une longueur d'onde d'un faisceau (102) depuis la première source de lumière (202) et celle d'un faisceau (101) depuis la seconde source de lumière (201) sont autorisées à être différentes l'une de l'autre, et un miroir dans lequel un facteur de réflexion et un facteur de transmission sont différents en fonction d'une longueur d'onde est utilisé.

13. Procédé de mesure de distance selon la revendication 8, dans lequel
la télémétrie de basse précision est exécutée par rapport à un point de mesure, une position de focalisation de la télémétrie de haute précision est réglée, et une opération pour exécuter la télémétrie de haute précision est répétée.

14. Procédé de mesure de distance selon la revendication 8, dans lequel
la télémétrie de basse précision est exécutée par rapport à une pluralité de points de mesure, une position de focalisation de la télémétrie de haute précision est réglée, et la télémétrie de haute précision est exécutée par rapport à la pluralité de points de mesure.
